# EUROPEAN PATENT SPECIFICATION

(11) **EP 2 951 224 B1**
(45) Date of publication and mention of the grant of the patent: **05.04.2017**
(21) Application number: 14705001.7
(22) Date of filing: 03.02.2014
(51) Int. Cl.: C08G 18/66, C08G 18/76, C08G 18/42

(54) **CLEAR HYDROPHOBIC TPU**
FARBLOSES HYDROPHOBES TPU
POLYURÉTHANE THERMOPLASTIQUE (TPU) HYDROPHOBE CLAIR

(30) Priority: 04.02.2013 US 201361760352 P
(43) Date of publication of application: 09.12.2015
(73) Proprietor: Lubrizol Advanced Materials, Inc., Cleveland, OH 44141-3247 (US)
(72) Inventor: MELTZER, Donald A., Akron, Ohio 44333 (US); KULKARNI, Pallavi, Wilmington, Massachusetts 01887 (US); WALDER, Anthony J., Wilmington, Massachusetts 01887 (US); FARKAS, Julius, Cleveland, Ohio 44141-3247 (US)
(74) Representative: dompatent von Kreisler Selting Werner - Partnerschaft von Patent- und Rechtsanwälten mbB
(86) International application number: PCT/US2014/014373
(87) International publication number: WO 2014/121174

(56) References cited:
- EP-A2- 0 417 553
- US-A1- 2009 192 262
- US-A1- 2010 056 682
- US-A1- 2011 135 899

## Description

### FIELD OF THE INVENTION

The present invention relates to a hydrophobic thermoplastic polyurethane (TPU) which has increased clarity and reduced haze. The hydrophobic TPUs of this invention have lower specific gravity than normal commercial hydrophilic TPU. The TPUs of this invention have several uses in molding and extrusion processes to make a wide variety of products, including products for medical applications.

### BACKGROUND OF THE INVENTION

TPU (thermoplastic polyurethane) polymers are typically made by reacting (1) a hydroxyl terminated polyether or hydroxyl terminated polyester, (2) a chain extender, such as a short chain diol, and (3) an isocyanate compound. Various types of compounds for each of the three reactants are disclosed in the literature. The TPU polymers made from these three reactants find use in various fields where products are made by melt processing the TPU and forming it into various shapes to produce desired articles by processes such as molding and extrusion.

TPUs are segmented polymers having soft segments and hard segments. This feature accounts for their excellent elastic properties. The soft segments are derived from the hydroxyl terminated polyether or polyester (also referred to as the polyol) and the hard segments are derived from the isocyanate and the chain extender. The chain extender is typically one of a variety of short chain glycols, with 1,4 butane diol being the most common.

TPUs are normally hydrophilic polymers, with the ones which use a polyether polyol, such as a polyethylene glycol, being the most hydrophilic. TPUs which use a polyester polyol, such as ones made with a polyol made from adipic acid reacted with 1,4-butaine diol are also hydrophilic. TPUs which are hydrophobic are not very common.

US 2009/0192262 A1 discloses a hydrophobic TPU which uses a polyester polyol made with a dimerized fatty acid. The TPUs made in US 2009/0192262 A1 are opaque.

US 2010/0056682 A1 also discloses a hydrophobic TPU which uses a polyester polyol made with a dimerized fatty acid and mineral oil as an additive to the TPU. The TPUs made in US 2010/0056682 are also opaque.

There exists a need to have a hydrophobic TPU which has greater clarity than prior art hydrophobic TPUs.

### SUMMARY OF THE INVENTION

Hydrophobic TPUs of this invention comprise the reaction product of:
(a) at least one hydrophobic polyol, wherein said hydrophobic polyol is a diacid polyester polyol made with a dimerised fatty acid containing from 26 to 44 carbon atoms;
(b)at least one linear diol chain extender having from 10 to 14 carbon atoms;
(c) at least one branched diol chain extender having from 8 to 12 carbon atoms and wherein at least 2 carbon atoms of said branched chain extender are in the branch, wherein the weight ratio of said linear chain extender to said branched chain extender is from 70:30 to 85:15;
(d) at least one diisocyanate; and
(e) optionally at least one urethane catalyst.

In the most preferred embodiment, the hydrophobic polyol is made with a dimerised fatty acid containing 36 carbon atoms reacted with 1,6 hexane diol to provide a hydroxyl terminated polyester polyol. Also, in the most preferred embodiment, the linear diol chain extender is 1,12-dodecane diol (12 carbon atom). It is preferred to use 2-butyl-2-ethyl propane diol and/or 1,4-cyclohexane dimethanol as the branched diol chain extender. A blend of two or more branched chain extenders may be used.

In the most preferred embodiment, the diisocyanate used is 4,4'-methylene bis-(phenyl isocyanate). A urethane catalyst is used for the softer grades of TPU, such as from 70-90 Shore A hardness. For harder grades of TPU, such as 91 to 98 Shore A hardness, a catalyst is not desired.

The hydrophobic TPUs of this invention have low specific gravity (lower than typical TPUs) of from 0.90 to 1.10 g/cm³, and preferably from 0.95 to 1.07 g/cm³.

The process to make the hydrophobic TPU of this invention can be any of the normal processes to make a TPU. The most common types of processes are the one-shot process where the reactants are fed to a twin screw extruder and the reaction occurs in the extruder. The most preferred process is a batch process where the at least two chain extenders (linear chain extender and branched chain extender) are mixed together and heated to form a clear homogenous liquid mixture. The hydrophobic polyol is added to the reaction vessel and the heated chain extender mixture is added to the reaction vessel and mixed with the polyol. The diisocyanate is added to the reaction vessel to form the reaction mixture and the reaction is allowed to proceed for 1 to 3 minutes. Once the reaction temperature reaches a temperature of from 80°C to 100°C and the reaction mixture is still in a pourable state, the reaction mixture is transferred to a container and the container containing the reaction mixture is transferred into a heated oven to complete the reaction. The oven is usually heated to a temperature of from 120°C to 130°C and the reaction is complete in 3 to 5 hours.

The fully reacted TPU by the batch process described above is granulated and the granules are extruded into pellet form for further processing into various products.

The hydrophobic TPUs of the invention are used in products where increased clarity is desired, such as medical applications, especially medical applications which have exposure to body fluids.

The processes, polymers and compositions of the present invention may suitably comprise, consist of, or consist essentially of the reactants, process steps and process delineations described herein. The invention illustratively disclosed herein may be practiced in the absence of any reactant or process step which is not specifically disclosed herein.

### DETAILED DESCRIPTION

The first necessary reactant to make the TPU composition of this invention is at least one hydroxyl terminated hydrophobic polyol. The hydrophobic polyol is made from a dimerized fatty acid or esters thereof. The dimerized fatty acid contains from 26 to 44 carbon atoms preferably 36 carbon atoms. The dimerized fatty acid is reacted with a short chain diol to create the hydroxyl terminated hydrophobic polyol.

Dimer fatty acids (and esters thereof) are a well known commercially available class of dicarboxylic acids (or esters). They can, for example, be prepared by dimerising unsaturated long chain aliphatic monocarboxylic acids, usually of 13 to 22 carbon atoms, or their esters (alkyl esters). The dimer fatty acid will usually contain from 26 to 44 carbon atoms, preferably 36 to 44 carbon atoms, and most preferably 36 carbon atoms. Dimer fatty acids derived from C₁₈ unsaturated acids, which include linoleic and lindenic are particularly desirable to produce C₃₆ dimer fatty acids.

The dimer fatty acids will normally also contain proportions of trimer fatty acids (C₅₄ acids when using C₁₈ starting acids), possibly even higher oligomers and also small amounts of the monomer acids. Several different grades of dimer acids are available from commercial sources and these differ from each other primarily in the amount of monobasic and trimer acid fractions and the degree of unsaturation. Priplast™ polyester polyols are branched C₃₆ dimerized fatty acids which are particularly useful as the hydrophobic polyol of this invention. Priplast™polyols are commercially available from Croda Uniqemna Inc. of Gouda, The Netherlands. The hydrophobic polyol used in synthesizing the TPUs of this invention will typically have a number average molecular weight in the range of 1,000 to 8,000 Daltons, preferably from 1,500 to 4,000, and more preferably have a number average molecular weight of from 2,000 to 3,000 Daltons.

To obtain the hydroxyl terminated polyol used to make the TPUs of this invention, the dimerized fatty acid is reacted with a short chain diol. Short chain diols having from 2 to 12 carbon atoms are used, with 1,6-hexane diol being the most preferred.

The second necessary ingredient to make the enhanced clarity hydrophobic TPUs of this invention is a chain extender mixture having at least two chain extenders. The first chain extender used in the chain extender mixture is at least one linear diol chain extender having from 10 to 14 carbon atoms, preferably 12 carbon atoms. 1,12-dodecane diol is the preferred linear chain extender. The use of the linear chain extender as the only chain extender gives good physical properties but is not clear. A second chain extender is required in the chain extender mixture to improve clarity and reduce haze. The second chain extender used in the chain extender mixture is a branched diol chain extender having from 8 to 12 carbon atoms, with at least 2 of the carbon atoms in the branch. The preferred branched diol chain extenders are 2-butyl-2 ethyl propane diol and 1,4-cyclohexane dimethanol, and mixtures thereof. The use of the branched diol chain extender as the only chain extender gives good clarity but is not stable and results in a sticky TPU, which is not desirable.

The preferred linear chain extender, 1,12-dodecane diol (DDO), does not melt until it reaches a temperature of from 85-90°C. The melting point of DDO is too high of a temperature to start the batch process reaction, because there would not be enough time to thoroughly mix the reactants before the reactants become too thick to transfer out of the reaction vessel. A branched chain extender, such as 2-butyl-2-ethyl propane diol (BEPD), which has a melting point of from 45-50°C, is added to the DDO chain extender. This causes the chain extender mixture to be liquid at less than 70°C, and preferably less than 65°C. This allows the batch process reaction to be started at from 63-68°C and thus allows for enough time to mix the reactants before the reaction becomes too thick to pour out of the reaction vessel into the container.

It is not only important that a mixture of the two chain extenders described above are used, but also the weight ratios in which they are used is important. The weight ratio of the linear chain extender to the branched chain extender is from 70:30 to 85:15, preferably 75:25 weight ratio. Weight ratio outside the range stated above do not give acceptable TPUs having improved clarity, reduced haze, and stable polymers (not sticky). The at least two chain extenders used are miscible at less than 90°C. The linear chain extender is not a liquid at room temperature, but when heated to its melting point (<90°C) in the presence of the branched chain extender a miscible liquid is obtained.

The third necessary reactant to make the increased clarity hydrophobic TPUs is at least one diisocyanate. Suitable diisocyanates include aromatic diisocyanates such as : 4,4'-methylene bis-(phenyl isocyanate) (MDI), m-xylene diisocyanate (XDI), phenylene-1, 4-diisocyanate, naphthalene-1,5-diisocyanate, diphenylmethane-3,3'-dimethoxy-4,4'-diisocyanate, and toluene diisocyanate (TDI); as well as aliphatic diisocyanates such as isophorone diisocyanate (IPDI), 1,4-cyclohexyl diisocyanate (CHDI), decane-1,10-diisocyyanate, and dicyclohexylmethane-4,4'-diisocyanate. Dimers and trimers of the above diisocyanates may also be used as well as a blend of two or more diisocyanates may be used.

The diisocyanates used in this invention may be in the form of a low molecular weight polymer or oligomer which is end capped with an isocyanate. For example, the hydroxyl terminated dimerized fatty acid polyol described above may be reacted with the diisocyanate to create a low molecular weight polymer end capped with isocyanate. In the TPU art, such materials are normally referred to as pre-polymers. Such pre-polymers normally have a number average molecular weight of from 1,500 to 10,000 Daltons. It is preferred to use the diisocyanate directly, rather than a pre-polymer.

The mole ratio of the one or more diisocyanate is from 0.95 to 1.05, preferably from 0.98 to 1.03, and more preferably from 0.99 to 1.01, per mole of the total moles of the one or more hydrophobic polyol and the two or more chain extenders.

The reactants (polyol, chain extenders, and isocyanate) to make the hydrophobic TPUs, should all be difunctional. Substantial amounts of trifunctional reactants should be avoided so as not to create a thermoset polymer. The amount of trifunctional reactants should be less than 2 mole percent, preferably less than 1 mole percent, and more preferably should be 0 mole percent (not present). The reactants should also be substantially free of moisture (water). The level of water should be less than 0.5% by weight, preferably less than 0.05% by weight. Higher moisture levels can cause crosslinking and also cause foaming in the reaction.

It is often desirable to utilize a catalyst to make softer grades of the hydrophobic TPUs. Catalysts are desirable for a TPU, having a hardness of 90 Shore A or less. For TPUs harder than 90 Shore A, it is not preferred to use a catalyst. Suitable catalysts are metal carboxylates as well as tertiary amines. Examples of metal carboxylate catalysts include stannous octoate, dibutyl tin dilaurate, phenyl mercuric propionate, lead octoate, iron acetylacetonate, magnesium acetylacetonate. Examples of tertiary amine catalysts include triethylene diamine. The amount of the one or more catalysts is low, usually from 50 to 100 parts by weight per million parts by weight of the TPU formed.

The processes employed to produce the TPUs of this invention can utilize conventional TPU manufacturing equipment. The TPUs can be made by the continuous process known as the one-shot process or by a batch process. In the one-shot process, the reactants are fed to an extruder and the reaction occurs in the extruder. The hydrophobic polyol can be mixed with the chain extender mixture prior to adding to the extruder. The diisocyanate is added separately to the extruder. The reactants are all heated to a temperature of from 100°C to 220°C. The reactants are mixed and reacted simultaneous in the extruder. The time in the extruder is usually from 2 to 10 minutes, preferably from 3 to 5 minutes. Upon exit from the extruder the TPU is formed into pellets.

The preferred process to make the clear hydrophobic TPU is the batch process. In the batch process, the chain extender mixture is formed and heated to a temperature necessary to liquefy the liner chain extender, usually from 80°C to 110°C. The chain extender mixture forms a miscible mixture. The hydrophobic polyol (thick viscous liquid) is added to the reaction vessel followed by the addition of the liquid chain extender mixture. The hydrophobic polyol is mixed with the liquid chain extender mixture in the reaction vessel. The diisocyanate is melted and then added to the reaction vessel and the reaction begins. The reaction start temperature is from 60°C to 70°C. A catalyst, if used, is added after the diisocyanate is added. The reaction is allowed to proceed while stirring until the reaction temperature reaches from 80°C to 100°C. The reaction in the reaction vessel usually requires from about 1 to about 3 minutes to reach a thickened state, but still pourable. While still in a pourable state, the reaction mixture is transferred to a container. The container with the reaction mixture inside, usually a pan, is placed in a heated environment (oven) to complete the reaction to form the TPU. The oven is preferably heated to a temperature of from 120°C to 130°C and the reaction will typically require from 3 to 5 hours to complete in the oven. Once the TPU is fully formed, the TPU in the form of a cake is removed from the container and granulated and the granules are extruded into pellet form.

The hydrophobic TPU polymers of this invention will preferably have a durometer hardness of from 70 to 98 Shore A as measured according to ASTM D2240, and mole preferably from 75 to 95 Shore A. The hardness can also be measured on a Shore D scale. Shore D is usually used for harder materials and the Shore D value is usually 50 points less than the Short A value. For example, a 90 Shore A would be 40 Shore D. This correlation does not hold well at the extremes of the scale, such as a 98 Shore A. The TPU polymers of this invention also have a specific gravity lower than normal hydrophilic TPU. The specific gravity will be from 0.90 to 1.10 g/cm³, preferably from 0.95 to 1.07 g/cm³. The TPU polymers of this invention are solid polymers, that is they are not cellular products as a polyurethane foam would be. The TPU polymers of this invention have increased clarity and reduced haze. The haze values are usually less than 50%, and the clarity is sufficient to read printed 10 point type through a 2.54 mm (100 mil) thick molded plaque of the TPU polymer.

The TPUs of this invention will have a urethane content of from about 20% to about 50%. Urethane content % is related to hardness and is defined by the weight of all chain extenders plus the weight of isocyanate divided by the weight of polyol plus chain extenders plus isocyanate X 100 to arrive at % urethane content.

The weight average molecular weight (Mw) of the clear hydrophobic TPU of this invention will typically be in the range of 40,000 to 700,000 Daltons, preferably from 60,000 to 400,000, and more preferably from 80,000 to 300,000 Daltons. The Mw of the TPU polymer is measured according to gel permeation chromatography (GPC) against polystyrene standards.

The TPU compositions of this invention may contain other additives, such as fillers, antioxidants, colorants, as are typically used in TPU. In some medical applications, barium sulfate may be used to provide better x-ray visibility.

The invention is illustrated by the following examples that are merely for the purpose of illustration. Unless specifically indicated otherwise, parts and percentages are given by weight.

### EXAMPLES

The following examples 1-14 in Table 1 used a laboratory batch process described above to make the TPUs of the examples. Examples 1-11 are comparative examples and examples 13-15 are examples of this invention. MDI was used in all examples as the diisocyanate and was used at a level to give a stoichiometry of 1.0, that is one isocyanate group for each hydroxyl group in the polyol and chain extender.

**Table 1**

| Ex | Priplast™ Polyol Used | Chain Extender | Urethane Content (%) | Batch Start Temp °C | Target Hardness (Shore A) |
|---|---|---|---|---|---|
| 1. | 3196¹ | DDO³ | 25 | 94 | 75A |
| 2. | 3196 | DDO | 35 | 84 | 85A |
| 3. | 3196 | Pentanediol | 25 | 58 | 75A |
| 4. | 3196 | Pentanediol | 35 | 58 | 85A |
| 5. | 1838² | BEPD⁴ | 25 | 51 | 75A |
| 6. | 1838 | BEPD | 45 | 51 | 95A |
| 7. | 1838 | BEPD | 46.5 | 55 | 95A |
| 8. | 3196 | CHDM⁵/DDO 50:50 | 25 | 63 | 75A |
| 9. | 3196 | CHDM/DDO 50:50 | 35 | 61 | 85A |
| 10. | 3196 | CHDM/DDO 50:50 | 45 | 62 | 95A |
| 11. | 3196 | BEPD/DDO 50:50 | 35 | 68 | 85A |
| 12. | 3196 | BEPD/DDO | 28.5 | 63 | 75A |
| | | 25:75 | | | |
| 13. | 3196 | BEPD/DDO 25:75 | 38.5 | 72 | 85A |
| 14. | 1838 | BEPD/DDO 25:75 | 46.5 | 72 | 95A |

| | | | | | |
|---|---|---|---|---|---|
| ¹Priplast™ 3196 is a 3000 MW C₃₆ dimer fatty acid reacted with 1,6-hexane diol. ²Priplast™ 1838 is a 2000 MW C₃₆ dimer fatty acid reacted with 1,6-hexane diol. ³DDO is 1,12 dodecane diol. ⁴BEPD is 2-butyl-2-ethyl propane diol. ⁵CHDM is 1,4-cyclohexane dimethanol. | | | | | |

In Examples 1 and 2, the reaction was too fast for a batch process due to the high start temperature necessary to melt the DDO.

In Examples 3 and 4, the start temperature was low, but there was high phase separation resulting in the TPU being non-homogenous and opaque.

In Example 5, the TPU was too sticky and could not be further processed.

In Examples 6 and 7, the TPU was clear and homogenous but when granulated and pelletized, the pellets stick to each other as they sit in storage.

In Examples 8, 9, and 10, which used a 50/50 weight percentage mixture of CHDM and DDO chain extenders, adding the CHDM as a co-chain extender enabled a lower start temperature than DDO alone (Example 1). The TPU produced was phase separated. The TPU was non-homogenous and white (not clear) in appearance.

In Example 11, a 50/50 weight mixture of BEPD/DDO was used as the chain extender. A lower start temperature of the TPU reaction was realized due to the BEPD lowering the melting temperature of the chain extender mixture. The TPU was homogenous and semi-clear in appearance.

In Examples 12, 13, and 14, a 25/75 weight mixture of BEPD/DDO was used as the chain extender. This chain extender enabled a low reaction start temperature. The TPU produced was homogenous and clear in appearance.

Examples 12, 13, and 14 are examples of the present invention where a low reaction start temperature is required for a batch process and a clear TPU product, that is not sticky, is desired.

### EXAMPLES 15-17

Examples 12,13 and 14 were repeated in a production facility with a batch size of 68 kg (150 pounds), which are shown below as Examples 15, 16 and 17. All three examples use a 25:75 weight ratio mixture of BEPD/DDO for the chain extender mixture. MDI was used as the diisocyanate at a stoichiometry of 1.0. The TPU produced was measured for physical properties, as shown in Table 2 below.

The procedure used in Examples 15,16 and 17 was to first make a mixture of the chain extenders BEPD and DDO at a weight ratio of 25/75. Both chain extenders are solid at room temperature, DDO melts at 85-90°C and BEPD melts at 45-50°C. BEPD is first melted at 60°C and weighed into a 18.97 liters (5 gallon) pail. To the melted BEPD preweighed flakes of DDO are added and the pail is put into an oven at 110°C so the DDO melts and a clear homogenous mixture of BEDP (25 wt. %) and DDO (75 wt. %) is obtained. This mixture is maintained at 110°C until ready to use.

The Priplast™ polyol is a thick viscous liquid at room temperature and is heated to about 85°C to make it easier to pour and weigh. The polyol is added to the reactor. Small amounts of antioxidant can be added to the polyol if desired while mixing. The hot (about 100°C) chain extender is then poured into the reactor vessel and mixed for 1 minute using a mixer set at 900 rpm. While mixing, MDI is added. MDI is also a solid at room temperature but melts at 37°C. A drum of MDI is melted and used at 55°C. Once MDI is added and the mixture mixed for 20 seconds, 4-6 drops of dibutyltin dilaurate catalyst is added when making the TPU with a hardness less than 90 Shore A (no catalyst is used for 95 Shore A TPU). The reaction start temperature varies from 63°C to 68°C). The reaction is allowed to proceed with stirring until it reaches about 80°C at which point it is removed from under the mixer and the contents of the reaction vessel are poured into trays. The reaction mix time varies between 40 seconds and 2 minutes, depending on the Shore hardness of the desired TPU. The trays are then placed in a 125°C oven for 4 hours to complete the reaction.

After the cakes of TPU are reacted, the cakes are cooled to room temperature and guillotined into large pieces which are then put in a granulator. The granules are sieved through a 9.52 mm (3/8 inch) sieve. The granules are dusted with a small amount of an anti-block agent, such as Cabosil^{®}. The granules are placed in a dryer for at least 4 hours at 200°C. The dried granules are fed to a single screw extruder to create pellets. The pellets are then treated with small amounts of an anti-block agent.

To determine the physical properties of the TPU made, various tests are run. To determine the melt index, 3 to 4 grams of pellets are put in a small mesh bag and dried for at least 4 hours at 93.33 °C (200 °F). Melt index is determined using a plastometer. The plastometer is a furnace with a capillary die at the bottom. The furnace and the die are heated to 200°C. The pellets are then fed to the furnace and pushed through the die using a 8700g load. Melt index (MI) is obtained in grams/10 minutes.

To determine stress-strain properties, dried pellets are extruded into tapes (0.51-0.64 mm thick, 10.16 cm wide (20-25 mil thick, 4 inches wide)). AST D412 size dogbones are punched out of these tapes and tested on an Instron^{®} tensile testing machine.

Durometer of the TPU is determined by injection molding bars per ASTM D2240. Durometers are measured after 5 days.

Examples 15 and 16 used Priplast™ 3196 polyol and example 17 used Priplast™ 1838 polyol.

**Table 2**

| Example No. | | | |
|---|---|---|---|
| Properties | 15 | 16 | 17 |
| Urethane Content % | 28.5 | 38.5 | 46.6 |
| Melt Index @ 200°C, 8700g load | 3 | 2.2 | 2.1 |
| Ultimate tensile (Psi) kPA | (2201) 15175 | (2873)19809 | (4122)28420 |
| Tensile stress @ 100% (Psi) kPA | (997) 6874 | (1477) 10184 | (1678)11569 |
| Tensile stress @ 200% (Psi) kPA | (1299)8956 | (2043)14086 | (2401)16554 |
| Tensile stress @ 300% (Psi) kPA | (1610) 11101 | (2846) 19622 | |
| Elongation % | 466 | 381 | 357 |
| Hardness (Shore A) | 78 | 87 | 95 |

The TPUs made in Examples 15, 16 and 17 were all clear with low haze and exhibited good physical properties.

### EXAMPLES 18-20

Examples 18-20 in Table 3 used a laboratory batch process similar to Examples 1-14 above. Examples 18 and 19 are examples of this invention, whereas Example 20 is a comparative example.

**Table 3**

| Ex | Priplast™ Polyol Used | Chain Extender Mixture WT/WT | Urethane Content (%) | Hardness (Shore A) | Haze * (%) | Sp.Gr. g/cm³ |
|---|---|---|---|---|---|---|
| 18. | 3196 | DDO/CHDM 85:15 | 35% | 89A | 37.2% | 1.0381 |
| 19. | 3196 | DDO/CHDM 80:20 | 36% | 89A | 44.0% | 1.0418 |
| 20. | 3196 | DDO/CHDM 87:13 | 38% | 90A | 81.1% | 1.0414 |

| | | | | | | |
|---|---|---|---|---|---|---|
| * % haze was measured using a BYK-Gardner Haze-Gard Plus meter. All samples were 6.35 mm [250 mil (0.25 in.)] in thickness. The sample is placed in the path of the sample beam on the haze meter, the start button is pushed, and the % transmission haze is recorded to the nearest 1%. The meter is the industry standard and follows ASTM D1003 in design. The meter has an internal reference beam to compare to the sample beam. | | | | | | |

In Example 18, a chain extender mixture of 85 wt. % DDO and a 15 wt. % CHDM was used. The TPU produced was clear and had a low haze value of 37.2%.

In Example 19, a chain extender mixture of 80 wt. % DDO and a 20 wt. % CHDM was used. The TPU produced was clear and had a low haze value of 44.0%.

In Example 20, a chain extender mixture of 87 wt. % DDO and a 13 wt. % of CHDM was used. The TPU was fairly opaque and not clear and had a haze value of 81.1%.

These examples demonstrate the need to have at least about 15 wt. % of the branched chain extender (CHDM) mixed with the linear chain extender (DDO) to make the chain extender mixture to give a TPU which is clear and has low haze.

## Claims

1. A clear thermoplastic polyurethane polymer composition comprising the reaction product of:
(a) at least one hydrophobic polyol, wherein said hydrophobic polyol is a diacid polyester polyol made with dimerised fatty acids and wherein said dimerised fatty acid contains from 26 to 44 carbon atoms,
(b) at least one linear diol chain extender having from 10 to 14 carbon atoms;
(c) at least one branched diol chain extender having from 8 to 12 carbon atoms and wherein at least 2 carbon atoms of said branched chain extender are in the branch, wherein the weight ratio of said linear chain extender to said branched chain extender is from 70:30 to 85:15;
(d) at least one diisocyanate; and
(e) optionally at least one urethane catalyst.

2. The thermoplastic polyurethane composition of Claim 1, wherein said dimerised fatty acid contains from 26 to 36 carbon atoms.

3. The thermoplastic polyurethane composition of Claim 1, wherein said polyol is made from a dimerised fatty acid having 36 carbon atoms reacted with 1,6-hexane diol.

4. The thermoplastic polyurethane composition of Claim 1, wherein said linear diol chain extender is 1,12-dodecane diol.

5. The thermoplastic polyurethane composition of Claim 1, wherein said branched diol chain extender is selected from the group consisting of 2-butyl-2-ethyl propane diol and 1,4-cyclohexane dimethanol.

6. The thermoplastic polyurethane composition of Claim 1, wherein said diisocyanate is 4,4'-methylene bis-(phenyl isocyanate).

7. The thermoplastic polyurethane composition of Claim 1 in the form of a shaped article, preferably wherein said shaped article is a medical article.

8. A batch process to produce the clear thermoplastic polyurethane polymer composition as defined in claim 1, said process comprising the steps of:
(a) making a diol chain extender mixture of at least one linear chain extender and at least one branched chain extender;
(b) heating the chain extender mixture to form a clear homogenous liquid mixture;
(c) maintaining the heated chain extender mixture in a liquid state until used;
(d) adding at least one hydrophobic polyol to a reaction vessel;
(e) adding said heated chain extender mixture to the reaction vessel;
(f) mixing the heated chain extender mixture with the polyol in the reaction vessel;
(g) adding at least one diisocyanate to the reaction vessel to form a reaction mixture;
(h) allow the reaction to proceed for 1 to 3 minutes;
(i) once the reaction temperature reaches a temperature of from 80 °C to 100°C and the reaction mixture is still in a pourable state, transfer the reaction mixture to a container; and
(j) transfer the container into a heated environment to complete the reaction.

9. The batch process of Claim 8, wherein the linear chain extender is 1,12-dodecane diol and the branched chain extender is selected from the group consisting of 2-butyl-2-ethyl propane diol and 1,4-cyclohexane dimethanol.

10. The batch process of Claim 9, wherein the weight ratio of said linear chain extender to said branched chain extender is from 70:30 to 85:15, preferably wherein the weight ratio of said linear chain extender to said branched chain extender is 75:25.

11. The batch process of Claim 8, wherein said chain extender mixture is heated to a temperature of from 85 °C to 110 °C to form a homogenous mixture.

12. The batch process of Claim 8, wherein said hydrophobic polyol is a 36 carbon atom dimerised fatty acid reacted with 1,6-hexane diol.

13. The batch process of Claim 12, wherein said hydrophobic polyol is heated to a temperature between 80 °C and 100 °C before adding said hydrophobic polyol to the reaction vessel.

14. The batch process of Claim 8, wherein the chain extender mixture is heated to a temperature of from 80 °C to 105 °C before adding said chain extender mixture to the reaction vessel.

15. The batch process of Claim 8, wherein the reaction mixture is from 60 °C to 70 °C at the start of reaction and the reaction is allowed to proceed until the reaction mixture reaches a temperature of from 80 °C to 100 °C.

## Patentansprüche

1. Klare thermoplastische Polyurethanpolymerzusammensetzung, umfassend das Reaktionsprodukt von:
(a) wenigstens einem hydrophoben Polyol, wobei das hydrophobe Polyol ein Disäurepolyesterpolyol ist, das mit dimerisierten Fettsäuren hergestellt ist, und wobei die dimerisierte Fettsäure 26 bis 44 Kohlenstoffatome enthält;
(b) wenigstens einem linearen Diol-Kettenverlängerer mit 10 bis 14 Kohlenstoffatomen;
(c) wenigstens einem verzweigten Diol-Kettenverlängerer mit 8 bis 12 Kohlenstoffatomen, wobei sich wenigstens 2 Kohlenstoffatome des verzweigten Kettenverlängerers in dem Zweig befinden, wobei das Gewichtsverhältnis des linearen Kettenverlängerers zu dem verzweigten Kettenverlängerer 70:30 bis 85:15 beträgt;
(d) wenigstens einem Diisocyanat; und
(e) gegebenenfalls wenigstens einem Urethan-Katalysator.

2. Thermoplastische Polyurethanzusammensetzung gemäß Anspruch 1, wobei die dimerisierte Fettsäure 26 bis 36 Kohlenstoffatome enthält.

3. Thermoplastische Polyurethanzusammensetzung gemäß Anspruch 1, wobei das Polyol aus einer dimerisierten Fettsäure mit 36 Kohlenstoffatomen, die mit 1,6-Hexandiol umgesetzt wird, hergestellt ist.

4. Thermoplastische Polyurethanzusammensetzung gemäß Anspruch 1, wobei es sich bei dem linearen Diol-Kettenverlängerer um 1,12-Dodecan-diol handelt.

5. Thermoplastische Polyurethanzusammensetzung gemäß Anspruch 1, wobei der verzweigte Diol-Kettenverlängerer aus der Gruppe ausgewählt ist, die aus 2-Butyl-2-ethylpropandiol und 1,4-Cyclohexandimethanol besteht.

6. Thermoplastische Polyurethanzusammensetzung gemäß Anspruch 1, wobei es sich bei dem Diisocyanat um 4,4'-Methylenbis(phenylisocyanat) handelt.

7. Thermoplastische Polyurethanzusammensetzung gemäß Anspruch 1 in Form eines geformten Artikels, wobei der geformte Artikel vorzugsweise ein medizinischer Artikel ist.

8. Diskontinuierliches Verfahren zur Herstellung der klaren thermoplastischen Polyurethanpolymerzusammensetzung gemäß Anspruch 1, wobei das Verfahren die folgenden Schritte umfasst:
(a) Herstellen eines Diol-Kettenverlängerer-Gemischs aus wenigstens einem linearen Kettenverlängerer und wenigstens einem verzweigten Kettenverlängerer;
(b) Erhitzen des Kettenverlängerer-Gemischs unter Bildung eines klaren homogenen flüssigen Gemischs;
(c) Halten des erhitzten Kettenverlängerer-Gemischs in einem flüssigen Zustand, bis es verwendet wird;
(d) Hinzufügen wenigstens eines hydrophoben Polyols in einem Reaktionsgefäß;
(e) Hinzufügen des erhitzten Kettenverlängerer-Gemischs in das Reaktionsgefäß;
(f) Mischen des erhitzten Kettenverlängerer-Gemischs mit dem Polyol in dem Reaktionsgefäß;
(g) Hinzufügen wenigstens eines Diisocyanats in das Reaktionsgefäß unter Bildung eines Reaktionsgemischs;
(h) Fortschreitenlassen der Reaktion während 1 bis 3 Minuten;
(i) sobald die Reaktionstemperatur eine Temperatur von 80 °C bis 100 °C erreicht und das Reaktionsgemisch noch in einem gießfähigen Zustand ist, Überführen des Reaktionsgemischs in einen Behälter; und
(j) Überführen des Behälters in eine beheizte Umgebung, um die Reaktion zu beenden.

9. Diskontinuierliches Verfahren gemäß Anspruch 8, wobei es sich bei dem linearen Diol-Kettenverlängerer um 1,12-Dodecandiol handelt und der verzweigte Diol-Kettenverlängerer aus der Gruppe ausgewählt ist, die aus 2-Butyl-2-ethylpropandiol und 1,4-Cyclohexandimethanol besteht.

10. Diskontinuierliches Verfahren gemäß Anspruch 9, wobei das Gewichtsverhältnis des linearen Kettenverlängerers zu dem verzweigten Kettenverlängerer 70:30 bis 85:15 beträgt, wobei vorzugsweise das Gewichtsverhältnis des linearen Kettenverlängerers zu dem verzweigten Kettenverlängerer 75:25 beträgt.

11. Diskontinuierliches Verfahren gemäß Anspruch 8, wobei das Kettenverlängerer-Gemisch auf eine Temperatur von 85 °C bis 110 °C erhitzt wird, so dass ein homogenes Gemisch entsteht.

12. Diskontinuierliches Verfahren gemäß Anspruch 8, wobei das hydrophobe Polyol eine dimerisierte Fettsäure mit 36 Kohlenstoffatomen, die mit 1,6-Hexandiol umgesetzt wurde, ist.

13. Diskontinuierliches Verfahren gemäß Anspruch 12, wobei das hydrophobe Polyol auf eine Temperatur zwischen 80 °C und 100 °C erhitzt wird, bevor das hydrophobe Polyol in das Reaktionsgefäß gegeben wird.

14. Diskontinuierliches Verfahren gemäß Anspruch 8, wobei das Kettenverlängerer-Gemisch auf eine Temperatur von 80 °C bis 105 °C erhitzt wird, bevor das Kettenverlängerer-Gemisch in das Reaktionsgefäß gegeben wird.

15. Diskontinuierliches Verfahren gemäß Anspruch 8, wobei das Reaktionsgemisch zu Beginn der Reaktion 60 °C bis 70 °C heiß ist und die Reaktion fortschreiten gelassen wird, bis das Reaktionsgemisch eine Temperatur von 80 °C bis 100 °C erreicht.

## Revendications

1. Composition de polymère polyuréthane thermoplastique transparent comprenant le produit de réaction de :
(a) au moins un polyol hydrophobe, ledit polyol hydrophobe étant un polyester polyol de diacide préparé avec des acides gras dimérisés et ledit acide gras dimérisé contenant de 26 à 44 atomes de carbone,
(b) au moins un allongeur de chaîne diol linéaire comportant de 10 à 14 atomes de carbone ;
(c) au moins un allongeur de chaîne diol ramifiée comportant de 8 à 12 atomes de carbone et dans lequel au moins 2 atomes de carbone dudit allongeur de chaîne ramifiée se trouvent dans la ramification, dans lequel le rapport en poids entre ledit allongeur de chaîne linéaire et ledit allongeur de chaîne ramifiée est de 70:30 à 85:15 ;
(d) au moins un diisocyanate ; et
(e) facultativement au moins un catalyseur d'uréthane.

2. Composition de polyuréthane thermoplastique selon la revendication 1, dans laquelle ledit acide gras dimérisé contient de 26 à 36 atomes de carbone.

3. Composition de polyuréthane thermoplastique selon la revendication 1, dans laquelle ledit polyol est préparé à partir d'un acide gras dimérisé comportant 36 atomes de carbone mis à réagir avec du 1,6-hexane diol.

4. Composition de polyuréthane thermoplastique selon la revendication 1, dans laquelle ledit allongeur de chaîne diol linéaire est le 1,12-dodécane diol.

5. Composition de polyuréthane thermoplastique selon la revendication 1, dans laquelle ledit allongeur de chaîne diol ramifié est choisi dans le groupe consistant en le 2-butyl-2-éthyl propane diol et le 1,4-cyclohexane diméthanol.

6. Composition de polyuréthane thermoplastique selon la revendication 1, dans laquelle ledit diisocyanate est le 4,4'-méthylène bis(isocyanate de phényle).

7. Composition de polyuréthane thermoplastique selon la revendication 1, sous la forme d'un article façonné, de préférence dans laquelle ledit article façonné est un article médical.

8. Procédé discontinu de production de la composition de polymère polyuréthane thermoplastique transparent telle que définie dans la revendication 1, ledit procédé comprenant les étapes consistant à :
(a) préparer un mélange d'allongeurs de chaîne diol d'au moins un allongeur de chaîne linéaire et d'au moins un allongeur de chaîne ramifiée ;
(b) chauffer le mélange d'allongeurs de chaîne pour former un mélange liquide homogène transparent ;
(c) maintenir le mélange d'allongeurs de chaîne chauffé dans un état liquide jusqu'à utilisation ;
(d) additionner au moins un polyol hydrophobe à une cuve de réaction ;
(e) additionner ledit mélange d'allongeurs de chaîne chauffé à la cuve de réaction ;
(f) mélanger le mélange d'allongeurs de chaîne chauffé avec le polyol dans la cuve de réaction ;
(g) additionner au moins un diisocyanate à la cuve de réaction pour former un mélange de réaction ;
(h) laisser la réaction se dérouler pendant 1 à 3 minutes ;
(i) une fois que la température de réaction atteint une température de 80 °C à 100 °C et que le mélange de réaction est encore dans un état pouvant être versé, transférer le mélange de réaction dans un contenant ; et
(j) transférer le contenant dans un environnement chauffé pour achever la réaction.

9. Procédé discontinu selon la revendication 8, dans lequel l'allongeur de chaîne linéaire est le 1,12-dodécane diol et l'allongeur de chaîne ramifié est choisi dans le groupe consistant en le 2-butyl-2-éthyl propane diol et le 1,4-cyclohexane diméthanol.

10. Procédé discontinu selon la revendication 9, dans lequel le rapport en poids entre ledit allongeur de chaîne linéaire et ledit allongeur de chaîne ramifiée est de 70:30 à 85:15, de préférence dans lequel le rapport en poids entre ledit allongeur de chaîne linéaire et ledit allongeur de chaîne ramifiée est de 75:25.

11. Procédé discontinu selon la revendication 8, dans lequel ledit mélange d'allongeurs de chaîne est chauffé à une température de 85 °C à 110 °C pour former un mélange homogène.

12. Procédé discontinu selon la revendication 8, dans lequel ledit polyol hydrophobe est un acide gras dimérisé à 36 atomes de carbone mis à réagir avec du 1,6-hexane diol.

13. Procédé discontinu selon la revendication 12, dans lequel ledit polyol hydrophobe est chauffé à une température entre 80 °C et 100 °C avant addition dudit polyol hydrophobe à la cuve de réaction.

14. Procédé discontinu selon la revendication 8, dans lequel le mélange d'allongeurs de chaîne est chauffé à une température de 80 °C à 105 °C avant addition dudit mélange d'allongeurs de chaîne à la cuve de réaction.

15. Procédé discontinu selon la revendication 8, dans lequel le mélange de réaction est de 60 °C à 70 °C au début de la réaction et on laisse la réaction se dérouler jusqu'à ce que le mélange de réaction atteigne une température de 80 °C à 100 °C.
